# EUROPÄISCHE PATENTANMELDUNG

(11) **EP 4 585 461 A1**
(43) Veröffentlichungstag der Anmeldung: **16.07.2025**
(21) Anmeldenummer: 24204145.7
(22) Anmeldetag: 02.10.2024
(51) Int. Cl.: B60N 2/68, B60N 2/30

(54) **ZUSATZSITZ**

(30) Priorität: 12.01.2024 DE 102024100879
(71) Anmelder: Aguti Produktentwicklung & Design GmbH, 88085 Langenargen (DE)
(72) Erfinder: Rogg, Christian, 88142 Wasserburg (DE); Seidel, Stefan, 88097 Eriskirch (DE)
(74) Vertreter: RavensPAT Patentanwälte Partnerschaft mbB

(57) **Zusammenfassung**

Vorrichtung für ein Sitzgestell, wobei die Vorrichtung eine Quertraverse (12) und eine Gelenkeinheit (13) aufweist, wobei die Gelenkeinheit (13) eine Drehachse (D) aufweist, wobei die Quertraverse (12) um die Drehachse (D) der Gelenkeinheit (13) zwischen einem Funktionszustand und einem Verstauzustand schwenkbar gelagert ist.
Die Gelenkeinheit (13) kann an einem Sitzgestell und/oder an einem Fahrzeugboden eines Fahrzeugs angeordnet werden.
An der Quertraverse (13) kann ein Sitzelement und/oder ein Rückenlehnenelement angeordnet werden, sodass ein Zusatzsitz realisierbar ist.

## Beschreibung

### Stand der Technik

Sitzgestelle für Fahrzeugsitze sind allgemein bekannt.

Bekannte Fahrzeugsitze umfassen ein Sitzgestell,
an welchem eine Sitzfläche und eine Rückenlehne des Fahrzeugsitz angeordnet ist. Dabei bestimmen die gesetzlichen Sicherheitsrichtlinien, dass eine Sitzrichtung eines Fahrzeugsitzes während der Fahrt in Fahrtrichtung vorhanden sein sind muss.

In bekannten Campingfahrzeugen, in welchen die Fahrzeugsitze eingebaut werden können, herrscht zumeist Platzmangel. Auch das Gewicht der in das Fahrzeug eingebauten Elemente spielt für das Gesamtgewicht des Fahrzeugs eine wesentliche Rolle.

Bekannt ist, dass Fahrzeugsitze als ein dritter Sitz in Fahrtrichtung hinter dem Fahrer- und Beifahrersitz in derartige Fahrzeuge eingebaut werden, um einen Sitzplatz während der Fahrt für eine weitere Person zu realisieren, welcher den Sicherheitsrichtlinien entspricht.

Häufig besteht jedoch der Bedarf eines Sitzplatzes für die Fahrt für eine weitere, vierte oder fünfte Person. Dieser Bedarf steht wiederum dem genannten Platzmangel und damit der fehlenden Einbaumöglichkeit eines weiteren Fahrzeugsitzes entgegen.

### Aufgabe und Vorteile der Erfindung

Der Erfindung liegt die Aufgabe zugrunde, eine verbesserte Vorrichtung bereitzustellen, um einen zusätzlichen Fahrzeugsitz zu realisieren. Insbesondere eine verbesserte oder alternative Vorrichtung, z.B. mit einem Sitzgestell, bereitzustellen, welche die rechtlichen Sicherheitsnormen erfüllt.

Die Aufgabe wird durch die Merkmale des Anspruchs 1 gelöst.

In den abhängigen Ansprüchen sind vorteilhafte und zweckmäßige Ausführungsformen der Erfindung angegeben.

Es wird eine Vorrichtung für ein Sitzgestell vorgeschlagen, wobei die Vorrichtung eine Quertraverse und eine Gelenkeinheit aufweist, wobei die Quertraverse mittels der Gelenkeinheit an einem Sitzgestell und/oder an einem Fahrzeugboden eines Fahrzeugs anordenbar ist, wobei die Gelenkeinheit eine Drehachse aufweist, wobei die Quertraverse um die Drehachse der Gelenkeinheit drehbar gelagert ist, sodass die Quertraverse freigestellt werden kann, wobei im freigestellten Zustand der Quertraverse ein Sitzelement und/oder ein Rückenlehnenelement an der Quertraverse anordenbar ist, sodass ein Zusatzsitz realisierbar ist. Hierdurch ist vergleichsweise einfach und kostengünstig ein Zusatzsitz realisierbar.

Beispielsweise ist das Sitzgestell als ein Sitzgestell für einen Fahrzeugsitz und/oder eine Fahrzeugsitzbank ausgebildet. Vorstellbar ist, dass das Sitzgestell eine Vertikalstütze und eine Querstrebe aufweist, wobei die Vertikalstütze aufrecht stehend im Bereich eines Fahrzeugbodens eines Fahrzeugs mit dem Fahrzeug verbindbar ausgebildet ist. Denkbar ist, dass die Vorrichtung insbesondere mittels der Gelenkeinheit am Sitzgestell angeordnet ist. Beispielsweise ist die Quertraverse um die Drehachse der Gelenkeinheit relativ zum Sitzgestell drehbar gelagert.

Beispielsweise ist der Fahrzeugsitz oder die Fahrzeugsitzbank als ein Wohnmobilfahrzeugsitz, ein Reisemobilfahrzeugsitz, ein Wohnwagenfahrzeugsitz und/oder ein Caravanfahrzeugsitz ausgebildet.

Beispielsweise ist die Gelenkeinheit mit der Vertikalstütze und/oder mit der Querstrebe verbunden. Denkbar ist, dass die Gelenkeinheit mit der Vertikalstütze und/oder mit der Querstrebe unmittelbar verbunden ist. Vorstellbar ist, dass die Quertraverse um die Drehachse relativ zur Vertikalstütze und/oder relativ zur Querstrebe drehbar vorhanden ist.

Vorstellbar ist, dass die Quertraverse als eine längliche Strebe vorhanden ist. Denkbar ist, dass die Quertraverse als ein längliches Profil, z.B. als ein Hohl- oder Vollmaterial-Profil ausgebildet ist. Beispielsweise ist das Profil als ein Vierkantrohr ausgebildet.

Beispielsweise ist die Quertraverse mit einem ersten Ende mit der Gelenkeinheit verbunden. Denkbar ist, dass die Quertraverse allein mit dem ersten Ende der Quertraverse oder ausschließlich mit dem ersten Ende der Quertraverse mit dem Sitzgestell verbunden ist. Beispielsweise ist die Quertraverse ausschließlich mittels der Gelenkeinheit mit dem Sitzgestell verbunden.

Denkbar ist, dass die Quertraverse aus einer Verstauposition in eine Funktionsposition und zurück bewegbar vorhanden ist. Beispielsweise kann die Quertraverse um die Drehachse aus der Verstauposition in die Funktionsposition und zurück bewegt werden. Beispielsweise ist die Quertraverse in der Funktionsposition freigestellt vorhanden. Zum Beispiel ist die Quertraverse aus der Verstauposition in die Funktionsposition und zurück entlang einer vertikal ausgerichteten Bewegungsebene bewegbar. Vorgeschlagen wird auch, dass die Quertraverse aus der Verstauposition in die Funktionsposition und zurück entlang einer horizontal ausgerichteten Bewegungsebene bewegbar ist. Die Bewegungsebenen sind dabei bezogen auf den eingebauten Zustand im Fahrzeug zu sehen. Beispielsweise ist die horizontal ausgerichtete Bewegungsebene im eingebauten Zustand der Vorrichtung im Fahrzeug damit parallel zu einem Fahrzeugboden oder parallel zu einer Fahrtrichtung des Fahrzeugs ausgerichtet, während die vertikal ausgerichtete Bewegungsebene quer oder senkrecht zur Erstreckung des Fahrzeugbodens oder quer bzw. senkrecht zur Fahrtrichtung des Fahrzeugs ausgerichtet ist.

Beispielsweise weist das Sitzgestell eine Vertikalstütze und eine zur Vertikalstütze quer ausgerichtete Querstrebe auf. Denkbar ist, dass im montierten Zustand des Sitzgestells im Fahrzeug die Vertikalstütze in Längsrichtung der Vertikalstütze vertikal ausgerichtet ist. Vorstellbar ist auch, dass an einem unteren Endabschnitt der Vertikalstütze die Vertikalstütze im Bereich eines Fahrzeugbodens des Fahrzeugs mit dem Fahrzeug verbindbar ist. Beispielsweise weist das Sitzgestell genau eine Vertikalstütze auf. Vorstellbar ist, dass das Sitzgestell zwei oder mehr Vertikalstützen aufweist. Denkbar ist auch, dass das Sitzgestell genau zwei, genau drei oder genau vier Vertikalstützen aufweist. Weist das Sitzgestell zwei oder mehr Vertikalstützen auf, sind die Vertikalstützen beispielsweise voneinander beabstandet vorhanden. Zum Beispiel sind die Vertikalstützen quer zu einer Sitzrichtung des mit dem Sitzgestell realisierbaren Fahrzeugsitz oder Fahrzeugsitzbank voneinander beabstandet vorhanden.

Die Querstrebe ist bezogen auf den Nutz- bzw. Einbauzustand im Fahrzeug vorzugsweise horizontal ausgerichtet. Eine Höhe des Sitzgestells, z.B. entsprechend der Höhe der Vertikalstütze, ist senkrecht bezogen auf den Einbauzustand des Sitzgestells zu sehen. Die senkrechte Erstreckung fällt beispielsweise mit der Längsachse der Vertikalstütze oder der mehreren Vertikalstützen zusammen. Dies bedeutet, dass bei am horizontal ausgerichteten Fahrzeugboden eingebautem Sitzgestell die Vertikalstütze z.B. senkrecht steht. Denkbar ist jedoch auch, dass die Vertikalstütze, beispielsweise in eine Richtung quer zur Sitzrichtung, um die Vertikale verkippt vorhanden ist. Die Querstrebe ist dabei beispielsweise mit ihrer Längsachse horizontal ausgerichtet. Die Sitzrichtung ist beispielsweise senkrecht zur Vertikalstütze bzw. senkrecht zur Längsachse der Vertikalstütze und senkrecht zur Querstrebe bzw. senkrecht zur Längsachse der Querstrebe ausgerichtet vorhanden. Beispielsweise ist die Längsachse der Querstrebe quer, z.B. senkrecht, zur Längsachse der Vertikalstütze ausgerichtet.

Zum Beispiel weist zur Abstützung des Sitzgestells am Fahrzeugboden das Sitzgestell einen Stützabschnitt auf, um im angeordneten Zustand des Sitzgestells im Fahrzeug das Sitzgestell am Fahrzeug abzustützen. Beispielsweise steht der Stützabschnitt in Sitzrichtung über eine Ebene vor, die durch eine in Sitzrichtung vorne liegende Vorderseite der Vertikalstütze bestimmt ist. Denkbar ist auch, dass der Stützabschnitt über ein unteres Stützabschnitt-Ende am Fahrzeugboden befestigbar ist, wobei das untere Stützabschnitt-Ende in Sitzrichtung beabstandet ist zum unteren Ende der Vertikalstütze. Der Stützabschnitt ist beispielsweise ein nach vorne unten gerichteter z.B. schräg in Sitzrichtung bzw. nach vorne ausgerichtetes längliches starres Profil, z.B. in Form eines Stützfußes. Beispielsweise erstreckt sich der Stützabschnitt in einem Raum unterhalb einer Sitzhöhe bzw. Sitzflächenhöhe des mit dem Gestell bildbaren Sitzes bzw. dessen Sitz-Polsterung.

Beispielsweise weist das Sitzgestell einen Stützabschnitt in Form eines Stützfuß auf, wobei der Stützfuß mit einem ersten Ende an der Vertikalstütze angebunden ist und mit einem zweiten Ende, z.B. dem unteren Stützabschnitt-Ende, im Bereich des Fahrzeugbodens des Fahrzeugs mit dem Fahrzeug verbindbar ausgebildet ist, wobei der Stützfuß im angeordneten Zustand am Fahrzeug in Fahrtrichtung schräg nach unten abstehend mit dem ersten Ende an der Vertikalstütze angeordnet ist. Vorstellbar ist, dass die Gelenkeinheit am Stützfuß angeordnet ist.

Die Vorrichtung ist beispielsweise als eine Baueinheit gestaltet, die in einem Inneren des Fahrzeugs einbaubar ist. Z.B. ist die Vorrichtung an einem Fahrzeugboden befestigbar zum Beispiel anschraubbar. Denkbar ist auch, dass die Vorrichtung, beispielsweise zusätzlich, an einer Fahrzeugsäule, einer Wandstruktur oder Deckenstruktur des Fahrzeugs fixierbar ist. Vorstellbar ist, dass das Sitzgestell an einem Fahrzeugboden befestigbar ist. Denkbar ist weiter, dass die Quertraverse an einer Wand oder einer Wandstruktur des Fahrzeugs befestigbar ist. Beispielsweise ist die Quertraverse dazu ausgebildet, im freigestellten Zustand mit der Wand oder der Wandstruktur des Fahrzeugs verbunden zu werden. Hierdurch kann eine Stabilität der Vorrichtung im freigestellten Funktionszustand verbessert sein.

Vorgeschlagen wird auch, dass ein Sicherheitselement der Vorrichtung oder ein Sicherheitselement des Fahrzeugsitz der Vorrichtung an der Wand oder der Wandstruktur angeordnet ist. Beispielsweise ist das Sicherheitselement als ein Gurtschloss, ein Gurtumlenker, als eine Gurtbefestigung und/oder als ein Gurtaufroller ausgebildet. Hierdurch sind die Sicherheitsanforderungen vergleichsweise einfach erfüllbar.

Zum Beispiel ist die Vertikalstütze und/oder die Querstrebe als ein längliches Profil ausgebildet. Z.B. ist die Vertikalstütze und/oder die Querstrebe als ein Hohl- oder Vollmaterial-Profil, beispielsweise als ein Vierkantrohr ausgebildet. Vorstellbar ist auch, dass eine Vertikalstütze aus zwei oder mehr Profilen gebildet ist. Beispielsweise sind die zwei oder mehr Profile der Vertikalstütze entlang der Längsachse der Vertikalstütze miteinander verbunden. Zum Beispiel weist die Vertikalstütze vertikal oberhalb der Querstrebe z.B. horizontal geschlitzte Abschnitte auf. Hierdurch kann eine gewünschte plastische Verformung der Vertikalstütze vorgegeben werden, welche im Belastungsfall bei Überschreiten einer Grenz-Zugbelastung in Sitzrichtung stattfindet.

Der Begriff "Sitzrichtung" ist bezogen auf eine in dem mit der Vorrichtung gebildeten Fahrzeugsitz sitzende Person zu verstehen.

Beispielsweise weist die Quertraverse eine Längsachse auf. Zum Beispiel ist die Längsachse der Quertraverse im Verstauzustand parallel zur Längsachse der Vertikalstütze vorhanden. Denkbar ist auch, dass die Längsachse der Quertraverse sich im Verstauzustand in Sitzrichtung erstreckt. Z.B. ist die Quertraverse im Verstauzustand quer zur Längsachse der Querstrebe und quer zur Längsachse der Vertikalstütze ausgerichtet vorhanden. Hierdurch ist ein vergleichsweise kompakter, platzsparender Aufbau im Verstauzustand realisiert.

Beispielsweise wird die Quertraverse aus dem Verstauzustand in den Funktionszustand um die Drehachse in einem Winkel kleiner 185°, insbesondere um einen Winkel kleiner 180°, bewegt. Denkbar ist, dass ein Winkel des Drehbereichs der Quertraverse um die Drehachse kleiner 100° oder kleiner 95° ist. Beispielsweise wird die Quertraverse vom Verstauzustand in den Funktionszustand und umgekehrt um genau den Winkel 90° um die Drehachse D gedreht. Der Winkel wird dabei gebildet durch die Längsachse der Quertraverse im Verstauzustand zur Längsachse der Quertraverse im Funktionszustand. Beispielsweise wird die Quertraverse um die Drehachse vom Verstauzustand in den Funktionszustand um einen Winkelbereich zwischen 80° und 100°, beispielsweise zwischen 85° und 100° oder zwischen 85° und 95° gedreht.

Beispielsweise ist die Quertraverse mit der Längsachse der Quertraverse entlang der Bewegungsebene der Quertraverse vom Verstauzustand in den Funktionszustand und zurück bewegbar.

Zum Beispiel ist die Längsachse der Quertraverse im Funktionszustand parallel zur Längsachse der Querstrebe ausgerichtet. Beispielsweise ist die Längsachse der Quertraverse im Funktionszustand quer zur Längsachse der Vertikalstütze vorhanden. Denkbar ist, dass die Längsachse der Quertraverse sich im Funktionszustand quer zur Sitzrichtung erstreckt. Beispielsweise spannt die Längsachse der Quertraverse im Funktionszustand zusammen mit der Sitzrichtung eine Fläche auf, welche parallel oder annähernd parallel zu einer Sitzfläche des mit dem Sitzgestell gebildeten Fahrzeugsitz ausgerichtet ist.

Auch wird vorgeschlagen, dass die Drehachse der Gelenkeinheit horizontal oder vertikal ausgerichtet vorhanden ist. Beispielsweise erstreckt sich die Drehachse in der Horizontalen oder in der Vertikalen.

Beispielsweise ist die Drehachse der Gelenkeinheit parallel zur Längsachse der Vertikalstütze ausgerichtet vorhanden. Denkbar ist auch, dass die Drehachse der Gelenkeinheit parallel zur Längsachse der Querstrebe vorhanden ist. Beispielsweise erstreckt sich die Drehachse in Sitzrichtung oder ist quer zur Sitzrichtung vorhanden. Beispielsweise ist die Gelenkachse der Dreheinheit quer zur Längsachse der Quertraverse ausgerichtet.

Auch wird vorgeschlagen, dass die Gelenkeinheit einen Haltemechanismus aufweist, um die Quertraverse in einem eingeschwenkten Zustand am Sitzgestell und/oder in einem freigestellten Zustand am Sitzgestell relativ zum Sitzgestell festzulegen. Hierdurch ist eine unbeabsichtigte Bewegung der Quertraverse vom Verstauzustand in den Funktionszustand oder umgekehrt verhindert.

Beispielsweise weist der Haltemechanismus eine Rastmechanik auf. Beispielsweise ist die Rastmechanik derart vorhanden, dass die Quertraverse in der Funktionsposition und/oder in der Verstauposition selbsttätig verrastet. Beispielsweise ist eine Verriegelung des Haltemechanismus lösbar, z.B. manuell durch einen Nutzer. Denkbar ist, dass der Haltemechanismus eine Sicherungsbolzen aufweist, welcher die Quertraverse in der Funktionsposition und/oder in der Verstauposition festlegt. Denkbar ist, dass der Haltemechanismus als eine Einhandverriegelgung ausgebildet ist.

Ebenfalls wird vorgeschlagen, dass die Vorrichtung das Sitzelement für den Zusatzsitz aufweist, wobei die Quertraverse Montageelemente zur Anordnung des Sitzelement aufweist, wobei mittels der Montageelemente das Sitzelement lösbar mit der Quertraverse verbindbar ist, sodass der Zusatzsitz realisierbar ist. Hierdurch ist vergleichsweise einfach ein Zusatzsitz realisierbar.

Beispielsweise weist das Sitzelement Rasthaken auf, welche in Rastösen eingreifen, sodass das Sitzelement an die Quertraverse angehängt oder eingehängt werden kann. Denkbar ist auch, dass der Fahrzeugsitz das Sitzelement aufweist. Beispielsweise weist das Sitzelement eine Stützfläche auf, welche im angeordneten Zustand an einer Unterseite der Quertraverse angreift, sodass das Sitzelement sich an der Quertraverse abstützt.

Außerdem wird vorgeschlagen, dass die Vorrichtung das Rückenlehnenelement für den Zusatzsitz aufweist, wobei die Quertraverse Montageorgane zur Anordnung des Rückenlehnenelements aufweist, wobei mittels der Montageorgane das Rückenlehnenelement lösbar mit der Quertraverse verbindbar ist, sodass der Zusatzsitz realisierbar ist. Hierdurch ist das Rückenlehnenelement im unbenutzten Zustand vergleichsweise einfach verstaubar. Zum Beispiel umfasst die Vorrichtung das Rückenlehnenelement und/oder das Sitzelement.

In einer vorgeschlagenen Variant sind das Sitzelement und das Rückenlehnenelement als eine Einheit gelenkig miteinander verbunden, sodass eine Sitzfläche des Sitzelements in Richtung einer Anlehnfläche des Rückenlehnenelements und umgekehrt schwenkbar oder drehbar vorhanden ist. Vorstellbar ist, dass diese Einheit an die Quertraverse anordenbar ist. Beispielsweise weist die Quertraverse Anbringöffnungen auf, in welche Montagebolzen der Einheit eingreifend angeordnet werden können, z.B. eingesteckt werden können.

Beispielsweise ist die Vorrichtung derart ausgebildet, dass ausschließlich im demontierten Zustand des Sitzelements und des Rückenlehnenelements von der Quertraverse die Quertraverse aus dem Funktionszustand in den Verstauzustand bewegbar ist. Denkbar ist, dass das Sitzelement oder das Rückenlehnenelement im angeordneten Zustand an der Quertraverse eine Bewegung der Quertraverse vom Funktionszustand in den Verstauzustand blockieren.

Beispielsweise ist das Sitzgestell zur Anordnung einer Sitzpolsterung und eines Personenrückhaltesystems ausgebildet. Hierdurch ist ein Fahrzeugsitz mit dem Sitzgestell realisierbar. Beispielsweise weist das Sitzgestell das Sitzelement und/oder das Rückenlehnenelement auf. Denkbar ist, dass am Sitzelement und/oder am Rückenlehnenelement eine Sitzpolsterung anordenbar ist. Beispielsweise kann mit dem Personenrückhaltesystem eine in Sitzrichtung sitzende Person im montierten Zustand des Sitzgestells in einem Fahrzeug gesichert werden.

Weiter wird vorgeschlagen, dass das Sitzgestell ein Sitzflächenelement aufweist, wobei die Gelenkeinheit unterhalb des Sitzflächenelements am Sitzgestell anordenbar ist. Hierdurch ist die Vorrichtung vergleichsweise platzsparend ausgebildet.

Beispielsweise ist die Gelenkeinheit im Bereich des Sitzflächenelements vorhanden. Denkbar ist, dass die Gelenkeinheit unterhalb einer Sitzfläche des Sitzflächenelements vorhanden ist. Hierdurch ist die Gelenkeinheit für einen Betrachter verborgen am Sitzgestell angeordnet.

Auch wird vorgeschlagen, dass die Quertraverse im eingeschwenkten Zustand am Sitzgestell unterhalb des Sitzflächenelements positioniert vorhanden ist. Hierdurch ist die Quertraverse vergleichsweise einfach verstaubar.

Beispielsweise ist die Quertraverse auf Höhe der Querstrebe vorhanden. Vorstellbar ist jedoch auch, dass das Quertraverse unterhalb der Querstrebe vorhanden ist. Beispielsweise ist die Längsachse der Querstrebe parallel und beabstandet zu einer Bewegungsebene der Quertraverse aus dem Verstauzustand in den Funktionszustand ausgerichtet.

Ebenfalls wird vorgeschlagen, dass die Quertraverse sich entlang einer Längsachse in eine Längserstreckung erstreckt, wobei die Quertraverse im eingeschwenkten Zustand am Sitzgestell sich mit der Längsachse der Quertraverse entlang einer Längsachse der Vertikalstütze erstreckt. Hierdurch ist eine weitere Variante einer vergleichsweise einfachen Verstauung der Quertraverse im Verstauzustand realisiert.

Zum Beispiel erstreckt sich die Vertikalstütze ausgehend von der Anbindung im Bodenbereich am Fahrzeug entlang der Längsachse der Vertikalstütze bis zu einem entgegengesetzten Ende der Vertikalstütze. Beispielsweise erstreckt sich die Quertraverse im eingeschwenkten Zustand am Sitzgestell mit der Längsachse der Quertraverse parallel zu der Längsachse der Vertikalstütze.

Auch wird vorgeschlagen, dass die Vorrichtung eine Vertikalstrebe aufweist, wobei die Vertikalstrebe am Sitzgestell und/oder am Fahrzeugboden anordenbar ist. Vorstellbar ist weiter, dass an der Vertikalstrebe ein Rückhalteelement für eine Sicherheitsgurtanordnung des Zusatzsitzes vorhanden ist. Beispielsweise weist die Vertikalstrebe ein Befestigungselement auf, um die Vertikalstrebe im Bereich des Fahrzeugbodens, z.B. am Fahrzeugrahmen des Fahrzeugs, zu befestigen. Vorstellbar ist auch, dass die Vertikalstrebe ein Befestigungsorgan aufweist, um die Vertikalstrebe am Sitzgestell, z.B. an der Vertikalstütze zu befestigen.

Beispielsweise weist die Gelenkeinheit einen Haltemechanismus auf und der Haltemechanismus der Gelenkeinheit ist dazu ausgebildet, die Quertraverse in einem eingeschwenkten Zustand an der Vertikalstrebe und/oder in einem freigestellten Zustand an der Vertikalstrebe relativ zur Vertikalstrebe festzulegen.

Vorstellbar ist auch, dass das Sitzgestell die Vertikalstrebe aufweist, wobei die Vertikalstrebe eine Längsachse aufweist und die Vertikalstrebe mit der Längsachse parallel und beabstandet zur Vertikalstütze vorhanden ist. Denkbar ist, dass die Vertikalstrebe mit der Querstrebe unmittelbar verbunden ist.

In einer möglichen Ausführungsform der Vorrichtung weist die Vorrichtung die Quertraverse, die Gelenkeinheit und die Vertikalstrebe auf, wobei die Quertraverse mittels der Gelenkeinheit an der Vertikalstrebe angeordnet ist, wobei die Vorrichtung mittels der Vertikalstrebe an einem Fahrzeugrahmen eines Fahrzeugs anordenbar ist, sodass ein Zusatzsitz in einem Fahrzeug realisierbar ist.

Vorstellbar ist auch, das an der Vertikalstrebe Elemente eines Gurtsystems, z.B. ein Rückhalteorgan, angeordnet sind. Beispielsweise ist an der Vertikalstrebe ein Gurtumlenker des Gurtsystems angeordnet. Vorstellbar ist, dass die Quertraverse im Verstauzustand mit der Längsachse parallel zur Längsachse der Vertikalstrebe ausgerichtet ist. Denkbar ist, dass die Quertraverse im Verstauzustand entlang der Längsachse an der Vertikalstrebe anliegt oder ansteht.

Außerdem wird vorgeschlagen, dass die Vorrichtung ein Anbindungsorgan aufweist, welches mit dem Fahrzeug oder dem Fahrzeugrahmen verbindbar ausgebildet ist, wobei am Anbindungsorgan ein Sicherheitselement, z.B. ein Gurtschloss des Gurtsystems, anordenbar ist, wobei das Anbindungsorgan im angeordneten Zustand der Vorrichtung im Fahrzeug in einer Richtung quer zur Fahrtrichtung beabstandet zum Sitzgestell oder zur Vertikalstrebe vorhanden ist. Beispielsweise ist das Gurtschloss mit dem Anbindungsorgan über eine Gurtpeitsche verbunden. Hierdurch ist eine Anordnung des Sicherheitselements, z.B. des Gurtschloss, im Bereich oder auf Höhe des Sitzelements realisiert. Denkbar ist auch, dass das Anbindungsorgan mittels einer Verbindungsstrebe mit der Vertikalstrebe verbunden ist.

Beispielsweise erstreckt sich die Vertikalstrebe entlang der Längsachse der Vertikalstrebe bis auf Höhe des Sitzelements. Denkbar ist auch, dass die Vertikalstrebe sich bis zu einem oberen Ende des an die Quertraverse angeordneten Rückenlehnenelements erstreckt. Denkbar ist, dass die Vertikalstrebe entlang der Längsachse eine Länge zwischen 250 mm und 1200 mm aufweist. Beispielsweise ist die Länge der Vertikalstrebe zwischen 250 mm und 1000 mm. Denkbar ist auch, dass die Länge der Vertikalstrebe zwischen 350 mm und 800 mm oder zwischen 350 mm und 650mm ist. Beispielsweise beträgt die Länge der Vertikalstrebe mindestens 250 mm, 300 mm, 350mm, 400 mm, 450 mm, 500 mm, 550 mm, 600 mm, 650 mm, 700 mm, 750 mm, 800 mm, 850 mm, 900 mm, 950 mm, 1000 mm, 1050 mm, 1100mm oder 1150 mm. Vorstellbar ist auch, dass die Vertikalstrebe sich höchstens über eine Länge von 300 mm, 350mm, 400 mm, 450 mm, 500 mm, 550 mm, 600 mm, 650 mm, 700 mm, 750 mm, 800 mm, 850 mm, 900 mm, 950 mm, 1000 mm, 1050 mm, 1100mm, 1150 mm, 1200 mm oder 250 mm erstreckt.

Ebenfalls wird vorgeschlagen, dass an der Quertraverse Anbindungselemente zur Anbindung einer Isofix-Halteraste eines Isofix-Kindersitzes vorhanden sind. Hierdurch kann ein Isofix-Kindersitz an der Vorrichtung neben dem Fahrzeugsitz entsprechend der Sicherheitsnormen befestigt werden. Beispielsweise ist das Anbindungselement als eine Bohrung vorhanden. Eine Isofix-Halteraste ist beispielsweise in Form eines U-Bügels an der Quertraverse befestigt. Vorstellbar ist auch, dass an der durch das Rückenlehnenelement und das Sitzelement gebildeten Einheit Isofix-Halterasten vorhanden sind.

Beispielweise weist die Quertraverse Isofix-Halterasten auf. Vorstellbar ist, dass an der Quertraverse zwei Isofix-Halterasten voneinander beabstandet vorhanden sind. Vorstellbar ist auch, dass am Rückenlehnenelement ein Halteelement für ein Top-Tether des Kindersitzes vorhanden ist, sodass der Top-Tether am Halteelement befestigbar ist. Beispielsweise ist das Halteelement als eine Öffnung oder als eine Öse ausgebildet, in welche ein Haken des Top Tether einhängbar ist.

Außerdem wird vorgeschlagen, dass die Vorrichtung eine Horizontalstrebe aufweist, welche mit einem Ende an der Vertikalstrebe befestigt ist, wobei die Horizontalstrebe in Sitzrichtung von der Vertikalstrebe abstehend vorhanden ist, wobei an einem zweiten Ende der Horizontalstrebe eine Abstützung der Horizontalstrebe zur Abstützung und/oder zur Befestigung am Fahrzeugboden vorhanden ist, wobei an der Horizontalstrebe eine Sitzabstützung beweglich vorhanden ist.

Denkbar ist, dass die Sitzabstützung als eine Strebe ausgebildet ist, auf welcher das Sitzelement im angeordneten Zustand aufliegt. Beispielsweise ist die Sitzabstützung von einem Funktionszustand in einen Verstauzustand und zurück schwenkbar. Beispielsweise bildet die Sitzabstützung im Funktionszustand eine Abstützung für das Sitzelement. Beispielsweise ist die Sitzabstützung mittels eines Drehgelenks drehbeweglich an der Horizontalstrebe gelagert. Beispielsweise weist die Abstützung der Horizontalstrebe Montagemittel zur Verbindung der Abstützung mit dem Fahrzeug, z.B. dem Fahrzeugrahmen, im angeordneten Zustand am Fahrzeug auf. Beispielsweise ist die Drehachse des Drehgelenks der Sitzabstützung vertikal ausgerichtet vorhanden. Beispielsweise ist die Sitzabstützung in einer horizontal ausgerichteten Bewegungsebene vom Funktionszustand in den Verstauzustand und zurück bewegbar. Beispielsweise ist die horizontal ausgerichtet Bewegungsebene der Sitzabstützung in vertikaler Richtung versetzt zur horizontal ausgerichteten Bewegungsebene der Quertraverse vorhanden. Hierdurch ist eine Kollision bei einer Bewegung der Quertraverse und der Sitzabstützung vom Funktionszustand in den Verstauzustand oder umgekehrt vermieden. Denkbar ist, dass die Bewegungsebene der Sitzabstützung unterhalb der Bewegungsebene der Quertraverse ausgebildet ist. Beispielsweise ist die Bewegungsebene der Sitzabstützung im angeordneten Zustand zwischen einer Ebene des Fahrzeugbodens und der Bewegungsebene der Quertraverse vorhanden.

Als eine mögliche Ausführungsform wird ein Sitzgestell mit einer Vorrichtung nach einer Variante wie vorangegangen ausgeführt vorgeschlagen.

Als beispielhafte Ausführungsvariante wird eine Fahrzeugsitzbank oder ein Fahrzeugsitz mit einer Vorrichtung nach einer der vorangegangen genannten Ausführungsformen vorgeschlagen. Beispielsweise weist der Fahrzeugsitz die Vorrichtung mit dem Sitzgestell auf. Denkbar ist, dass das Sitzgestell als Sitzgestell des Fahrzeugsitz vorhanden ist.

Als weitere denkbare Ausführungsvariante wird ein Fahrzeug, insbesondere Wohnmobil, mit einer Vorrichtung nach einer der vorangegangen genannten Ausführungsformen vorgeschlagen oder mit einer Fahrzeugsitzbank nach der vorangegangen genannten Ausführungsvariante.

### Figurenbeschreibung

Weitere Merkmale und Vorteile der Erfindung sind anhand eines schematisch gezeigten Ausführungsbeispiels näher erläutert.

Im Einzelnen zeigt:
- Figur 1: in einer perspektivischen Darstellung von schräg seitlich vorne oben eine Vorrichtung, welche an eine Sitzgestell angeordnet vorhanden ist,
- Figur 2: in der perspektivischen Darstellung die Vorrichtung gemäß Figur 1 mit einer Einheit umfassend ein Rückenlehnenelement und ein Sitzelement in einer ersten Montageposition,
- Figur 3: in der perspektivischen Darstellung die Vorrichtung gemäß Figur 1 mit der Einheit in einer zweiten Montageposition,
- Figur 4: in der perspektivischen Darstellung die Vorrichtung gemäß Figur 1 mit der Einheit im angeordneten Zustand an der Vorrichtung.

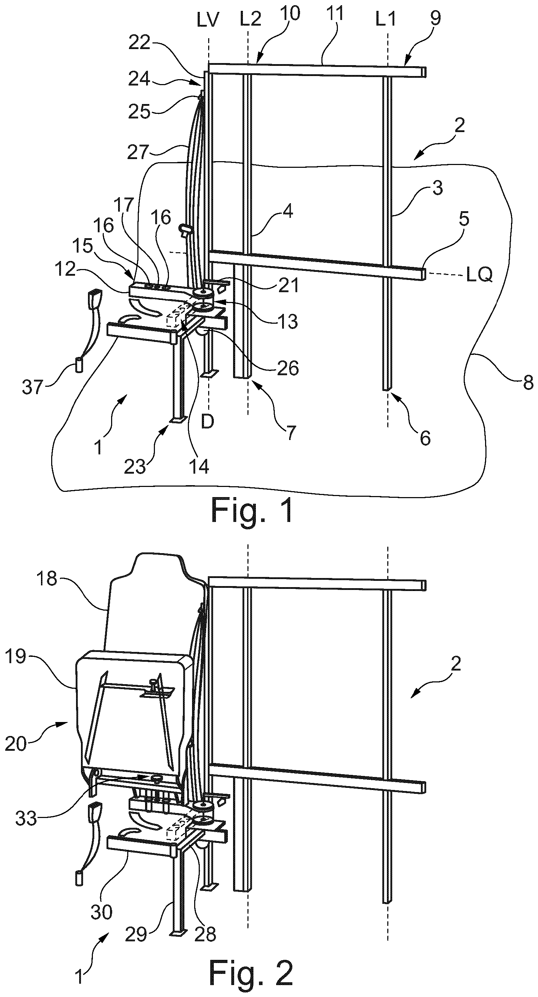

In Figur 1 ist eine Vorrichtung 1 und ein Sitzgestell 2 dargestellt.

Beispielsweise weist das Sitzgestell 2 eine erste Vertikalstütze 3 und eine zweite Vertikalstütze 4 auf, welche mittels einer ersten Querstrebe 5 miteinander verbunden sind. Die erste und die zweite Vertikalstütze 3, 4 sind an einem unteren Ende 6, 7 mit einem Fahrzeugboden 8 eines Fahrzeugs verbindbar. Die erste und die zweite Vertikalstütze 3, 4 erstrecken sich jeweils entlang einer Längsachse L1, L2 von dem unteren Ende 6, 7 bis zu einem oberen Ende 9, 10. Die erste Querstrebe 5 erstreckt sich entlang einer Längsachse LQ quer zu der ersten und der zweiten Vertikalstütze 3, 4. Denkbar ist weiter, dass das Sitzgestell 2 eine zweite Querstrebe 11 aufweist, welche die erste und die zweite Vertikalstütze 3, 4 an den oberen Enden 9, 10 miteinander verbindet. Denkbar ist, dass die zweite Querstrebe 11 Montagemittel aufweist, um einen Sicherheitsgurtanordnung und/oder um Kopfstützen an der zweiten Querstrebe 11 anzuordnen oder zu befestigen.

Die Vorrichtung 1 weist eine Quertraverse 12 und eine Gelenkeinheit 13 auf. In der in Figur 1 gezeigten Ausführungsform ist die Quertraverse 12 von einem Verstauzustand 14 (gestrichelt dargestellt) in einen Funktionszustand 15 und zurück bewegbar. Im Funktionszustand 15 befindet die Quertraverse 12 sich dabei im freigestellten Zustand. Hierbei kann die Quertraverse 12 in einer horizontalen Bewegungsebene bewegt werden. Hierzu ist eine Drehachse D der Gelenkeinheit 13 vertikal ausgerichtet vorhanden.

An der Quertraverse 12 sind beispielsweise Montageelemente oder Montageorgane in Form von Bohrungen 16 und einem Gewinde 17 ausgebildet, um ein Rückenlehnenelement 18 und/oder ein Sitzelement 19 zu befestigen. Im vorliegenden Ausführungsbeispiel sind das Rückenlehnenelement 18 und das Sitzelement 19 als eine Einheit 20 ausgebildet, wobei das Sitzelement 19 drehbeweglich mit dem Rückenlehnenelement 18 verbunden ist. In diesem Ausführungsbeispiel sind die Montageelemente und die Montageorgane der Vorrichtung 1 entsprechend identisch, da die Montageelement oder die Montageorgane zur Anbindung der Einheit 20 vorgesehen sind, womit zugleich das Rückenlehnenelement 18 und das Sitzelement 19 montierbar sind.

Beispielsweise weist die Gelenkeinheit 13 einen Haltemechanismus 21 auf. Der Haltemechanismus 21 ist beispielsweise als ein Arretierhebel mit Arretierfunktion ausgebildet. Mittels des Haltemechanismus 21 ist die Quertraverse 12 beispielsweise im Funktionszustand 15 und/oder im Verstauzustand 14 positionsfest festlegbar.

Beispielsweise weist die Vorrichtung 1 eine Vertikalstrebe 22 auf. Denkbar ist jedoch auch, dass die Vertikalstrebe 22 Teil des Sitzgestells 2 ist.

Die Vertikalstrebe 22 erstreckt sich entlang einer Längsachse LV in vertikaler Richtung. Denkbar ist, dass die Vertikalstrebe 22 an einem ersten Ende 23 im Bereich des Fahrzeugbodens 8 mit dem Fahrzeug verbindbar ist. Vorstellbar ist auch, dass die Vertikalstrebe 22 mit dem Sitzgestell 2 verbunden ist. Denkbar ist, dass die Vertikalstrebe 22 mit dem Fahrzeug und mit dem Sitzgestell 2 verbindbar ist oder dass die Vertikalstrebe 22 ausschließlich mit dem Fahrzeug oder ausschließlich mit dem Sitzgestell 2 verbunden ist. Beispielsweise ist die Vertikalstrebe 22 unmittelbar mit dem Sitzgestell 2 verbunden. Beispielsweise ist die Vertikalstrebe 22 mit der Querstrebe 5 verbunden. Denkbar ist, dass die Vertikalstrebe 22 mit der Querstrebe 5 verschraubt oder verschweißt vorhanden ist.

Vorstellbar ist weiterhin, dass die Vertikalstrebe 22 von einem unteren Ende 23 bis zu einem oberen Ende 24 entlang der Längsachse LV erstreckt. Vorstellbar, jedoch nicht gezeigt ist, dass die Vertikalstrebe 22 mit dem oberen Ende 24 bis auf etwa die Höhe der ersten Querstrebe 5 erstreckt. Beispielsweise erstreckt sich die Vertikalstrebe 22 mit dem oberen Ende bis zu der zweiten Querstrebe 11.

Beispielweise ist an der Vertikalstrebe 22 ein Element einer Sicherheitsgurtanordnung anbringbar. Beispielsweise ist an der Vertikalstrebe 22 im Bereich des oberen Endes ein Gurtumlenker 25 befestigt. Denkbar ist, dass in einem unteren Bereich der Vertikalstrebe 22 ein Gurtaufroller 26 befestigt ist. Dadurch ist ein Gurt 27 an der Vertikalstrebe 22 anordenbar. Hierdurch ist die Vorrichtung 1 als von weiteren Elementen eines Sitzgestells oder des Fahrzeug unabhängige Vorrichtung ausgebildet, welche durch die Ausbildung mit Vertikalstrebe 22 ein Gurtgestell für einen Fahrzeugsitz bereitstellt, welches die erforderlichen Sicherheitsnormen erfüllt.

Die Gelenkeinheit 13 der Vorrichtung 1 ist beispielsweise unmittelbar mit der Vertikalstrebe 22 verbunden. Denkbar ist, dass der Gurtaufroller 26 unterhalb der Gelenkeinheit 13 an der Vertikalstrebe 22 angeordnet ist.

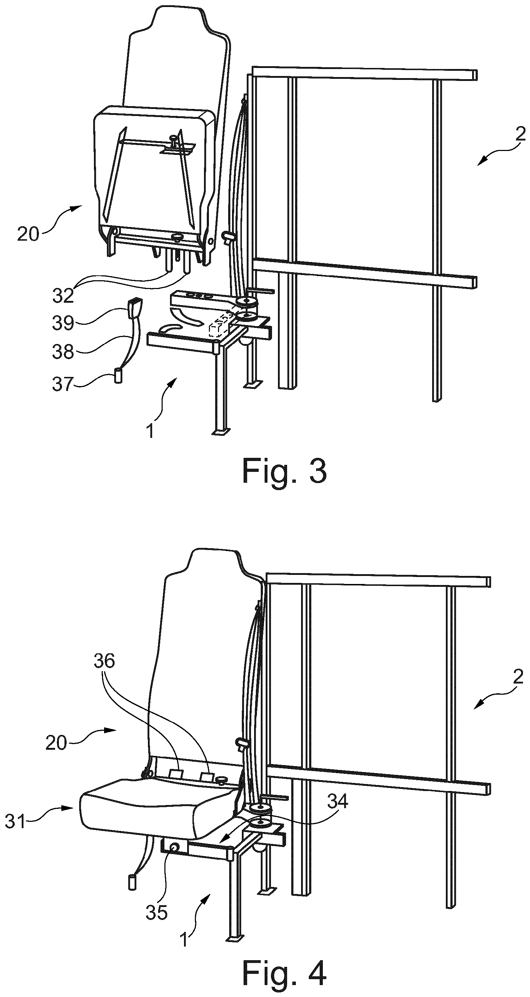

In einer Ausführungsform, welche in den Figuren 1 bis 4 dargestellt ist, weist die Vorrichtung 1 zusätzlich eine Horizontalstrebe 28 auf. Beispielsweise weist die Horizontalstrebe 28 idealerweise eine rein Komfortfunktion auf und ist nicht relevant zur Erfüllung der Sicherheitsnormen das Fahrzeugsitz. Die Horizontalstrebe 28 kann positionsfest mit der Vertikalstrebe 22 verbunden sind, z.B. verschraubt oder verschweißt. Vorstellbar ist weiterhin, dass die Horizontalstrebe 28 mittels einer Abstützung 29 im Bereich des Fahrzeugbodens am Fahrzeug abgestützt wird.

Beispielsweise ist an der Horizontalstrebe 28 eine Sitzabstützung 30 beweglich, insbesondere schwenkbeweglich oder drehbeweglich montiert.

An der Vorrichtung 1 ist nun zur Realisierung eines Zusatzsitz 31 die Einheit 20 umfassend das Rückenlehnenelement 18 und das Sitzelement 19 anordnenbar. Hierzu kann die Einheit 20 Bolzen 32 aufweisen, um die Einheit 20 auf die Quertraverse 12 aufzustecken. Der Montageablauf ist hierbei durch die Figurenserie 2 bis 4 dargestellt. Zusätzlich kann die Einheit 20 mittels einer Schraubverbindung 33 mit der Quertraverse 12 lösbar verschraubt werden.

Im montierten Zustand der Einheit 20 ist das Sitzelement 19 auf einer Auflagefläche 34 der Sitzabstützung 30 aufliegend vorhanden. Denkbar ist weiterhin, dass das Sitzelement 19 mittels einer weiteren Schraubverbindung 35 mit der Sitzabstützung 30 verschraubbar ist.

Denkbar ist auch, dass an der Einheit 20 Isofix-Halterasten 36 ausgebildet sind.

Beispielsweise weist die Vorrichtung 1 ein Anbindungsorgan 37 auf, welches mit dem Fahrzeug, z.B. im Bereich des Fahrzeugbodens 8 verbindbar ausgebildet ist. Beispielsweise ist mittels einer Gurtpeitsche 38 am Anbindungsorgan 37 ein Gurtschloss 39 angeordnet.

**Bezugszeichenliste**

| | | | |
|---|---|---|---|
| 1 | Vorrichtung | 21 | Haltemechanismus |
| 2 | Sitzgestell | 22 | Vertikalstrebe |
| 3 | Vertikalstütze | 23 | Ende |
| 4 | Vertikalstütze | 24 | Querstrebe |
| 5 | Querstrebe | 25 | Gurtumlenker |
| 6 | Ende | 26 | Gurtaufroller |
| 7 | Ende | 27 | Gurt |
| 8 | Fahrzeugboden | 28 | Horizontalstrebe |
| 9 | Ende | 29 | Abstützung |
| 10 | Ende | 30 | Sitzabstützung |
| 11 | Querstrebe | 31 | Zusatzsitz |
| 12 | Quertraverse | 32 | Bolzen |
| 13 | Gelenkeinheit | 33 | Schraubverbindung |
| 14 | Verstauzustand | 34 | Auflagefläche |
| 15 | Funktionszustand | 35 | Schraubverbindung |
| 16 | Bohrung | 36 | Isofix-Halterasten |
| 17 | Gewinde | 37 | Anbindungsorgan |
| 18 | Rückenlehnenelement | 38 | Gurtpeitsche |
| 19 | Sitzelement | 39 | Gurtschloss |
| 20 | Einheit | | |

## Patentansprüche

1. Vorrichtung (1) für ein Sitzgestell (2), wobei die Vorrichtung (1) eine Quertraverse (12) und eine Gelenkeinheit (13) aufweist, wobei die Quertraverse (12) mittels der Gelenkeinheit (13) an einem Sitzgestell (2) und/oder an einem Fahrzeugboden (8) eines Fahrzeugs anordenbar ist, wobei die Gelenkeinheit (13) eine Drehachse (D) aufweist, wobei die Quertraverse (12) um die Drehachse (D) der Gelenkeinheit (13) drehbar gelagert ist, sodass die Quertraverse (12) freigestellt werden kann, wobei im freigestellten Zustand der Quertraverse (12) ein Sitzelement (19) und/oder ein Rückenlehnenelement (18) an der Quertraverse (12) anordenbar ist, sodass ein Zusatzsitz (31) realisierbar ist.

2. Vorrichtung (1) nach einem der vorangegangenen Ansprüche,
**dadurch gekennzeichnet, dass** die Drehachse (D) der Gelenkeinheit (13) horizontal oder vertikal ausgerichtet vorhanden ist.

3. Vorrichtung (1) nach einem der vorangegangenen Ansprüche,
**dadurch gekennzeichnet, dass** die Gelenkeinheit (13) einen Haltemechanismus (21) aufweist, um die Quertraverse (12) in einem eingeschwenkten Zustand am Sitzgestell (2) und/oder in einem freigestellten Zustand am Sitzgestell (2) relativ zum Sitzgestell (2) festzulegen.

4. Vorrichtung (1) nach einem der vorangegangenen Ansprüche,
**dadurch gekennzeichnet, dass** die Vorrichtung (1) das Sitzelement (19) für den Zusatzsitz (31) aufweist, wobei die Quertraverse (12) Montageelemente (17) zur Anordnung des Sitzelement (19) aufweist, wobei mittels der Montageelemente (17) das Sitzelement (19) lösbar mit der Quertraverse (12) verbindbar ist, sodass der Zusatzsitz (31) realisierbar ist.

5. Vorrichtung (1) nach einem der vorangegangenen Ansprüche,
**dadurch gekennzeichnet, dass** die Vorrichtung (1) das Rückenlehnenelement (18) für den Zusatzsitz (31) aufweist, wobei die Quertraverse (12) Montageorgane (16) zur Anordnung des Rückenlehnenelements (18) aufweist, wobei mittels der Montageorgane (16) das Rückenlehnenelement (18) lösbar mit der Quertraverse (12) verbindbar ist, sodass der Zusatzsitz (31) realisierbar ist.

6. Vorrichtung (1) nach einem der vorangegangenen Ansprüche,
**dadurch gekennzeichnet, dass** die Vorrichtung (1) eine Vertikalstrebe (22) aufweist, wobei die Vertikalstrebe (22) am Sitzgestell (2) und/oder am Fahrzeugboden (8) anordenbar ist.

7. Vorrichtung (1) nach einem der vorangegangenen Ansprüche,
**dadurch gekennzeichnet, dass** an der Quertraverse (12) Anbindungselemente zur Anbindung einer Isofix-Halteraste eines Isofix-Kindersitzes vorhanden sind.

8. Sitzgestell (2) für eine Fahrzeugsitzbank mit einer Vorrichtung (1) (1) nach einem der vorangegangenen Ansprüche, wobei das Sitzgestell (2) eine Vertikalstütze (3, 4) und eine Querstrebe (5) aufweist, wobei die Vertikalstütze (3, 4) aufrecht stehend im Bereich eines Fahrzeugbodens (8) eines Fahrzeugs mit dem Fahrzeug verbindbar ausgebildet ist, wobei die Gelenkeinheit (13) am Sitzgestell (2) angeordnet ist.

9. Sitzgestell (2) nach dem vorangegangenen Anspruch 8, **dadurch gekennzeichnet, dass** das Sitzgestell (2) ein Sitzflächenelement aufweist, wobei die Gelenkeinheit (13) unterhalb des Sitzflächenelements am Sitzgestell (2) angeordnet ist.

10. Sitzgestell (2) nach dem vorangegangenen Anspruch 9, **dadurch gekennzeichnet, dass** die Quertraverse (12) im eingeschwenkten Zustand am Sitzgestell (2) unterhalb des Sitzflächenelements positioniert vorhanden ist.

11. Sitzgestell (2) nach einem der vorangegangenen Ansprüche 8 bis 10, **dadurch gekennzeichnet, dass** die Quertraverse (12) sich entlang einer Längsachse in eine Längserstreckung erstreckt, wobei die Quertraverse (12) im eingeschwenkten Zustand am Sitzgestell (2) sich mit ihrer Längsachse entlang einer Längsachse (L1, L2) der Vertikalstütze (3, 4) erstreckt.

12. Fahrzeugsitzbank mit einer Vorrichtung (1) nach einem der vorangegangenen Ansprüche 1 bis 7 oder mit einem Sitzgestell (2) nach einem der vorangegangenen Ansprüche 8 bis 11.

13. Fahrzeug, insbesondere Wohnmobil, mit einer Vorrichtung (1) nach einem der Ansprüche 1 bis 7, mit einem Sitzgestell (2) nach einem der Ansprüche 8 bis 11 oder mit einer Fahrzeugsitzbank nach dem vorangegangenen Anspruch 12.
